# EUROPÄISCHE PATENTSCHRIFT

(11) **EP 2 394 088 B1**
(45) Veröffentlichungstag und Bekanntmachung des Hinweises auf die Patenterteilung: **24.10.2018**
(21) Anmeldenummer: 10706499.0
(22) Anmeldetag: 04.02.2010
(51) Int. Cl.: H01R 9/18, F16L 15/00, H01R 13/46

(54) **ANSCHLUSSORGAN FÜR EIN LEITUNGSELEMENT UND ANSCHLUSSSYSTEM**
CONNECTING DEVICE FOR A GUIDE ELEMENT AND CONNECTING SYSTEM
ORGANE D'ASSEMBLAGE POUR UN ÉLÉMENT DE CONDUITE ET SYSTÈME D'ASSEMBLAGE

(30) Priorität: 04.02.2009 DE 102009007374; 17.08.2009 DE 102009037696
(43) Veröffentlichungstag der Anmeldung: 14.12.2011
(73) Patentinhaber: Amfomed Ag, 4123 Allschwil (CH)
(72) Erfinder: MARCHAND, Claude, CH-4434 Hölstein (CH)
(74) Vertreter: Manitz Finsterwald Patentanwälte PartmbB
(86) Internationale Anmeldenummer: PCT/EP2010/000707
(87) Internationale Veröffentlichungsnummer: WO 2010/089124

(56) Entgegenhaltungen:
- DE-A1-102007 008 042
- GB-A- 2 304 238
- US-A- 3 139 293
- US-A- 5 280 967
- US-A- 6 056 594
- US-A1- 2007 063 512
- US-B1- 6 502 604
- US-B1- 6 766 761

## Beschreibung

Die Erfindung betrifft ein Anschlussorgan für ein Leitungselement zur Förderung von Media, bestehend aus einer auf das Leitungselement aufsteckbaren Schraube mit einer axialen Durchbohrung, die einen Gewindeteil und einen Kopfteil bzw. Körperteil aufweist, sowie ein Anschlusssystem.

Die US 6,502,604 B1 beschreibt Vorrichtungen und Verfahren zur Identifizierung und zum Schutz von Armaturen. Weiterer Stand der Technik wird in den Druckschriften US 5,280,967, US 3,139,293, DE 10 2007 008042.7 A1, US 2007/0063512, US 6,766,761, US 6,056,594 und GB 2 304 238 A offenbart.

Der Erfindung liegt die Aufgabe zugrunde, ein verbessertes Anschlussorgan zu schaffen, welches mit einer Markierung versehen werden kann.

Um diese Aufgabe zu lösen wird erfindungsgemäß ein Anschlussorgan mit den Merkmalen des Anspruchs 1 vorgesehen.

Das Anschlussorgan das mit einem Leitungselement zur Förderung eines Mediums montierbar ist, besteht aus einem auf das Leitungselement aufsteckbaren hohlen Schraubelement, das einen Gewindeteil sowie einen Körperteil gegebenenfalls mit Werkzeugaufnahme aufweist und das mit einem ein komplementäres Gewinde sowie einen Körperteil aufweisenden komplementären Schraubelement verschraubbar ist, wobei das Anschlussorgan und das komplementäre Schraubelement mit einem jeweiligen Codierring versehen sind, wobei das Körperteil des Schraubelements und/oder des komplementären Schraubelements einen Sitz für die Aufnahme eines darauf montierbaren bzw. aufsteckbaren elastisch ausgebildeten Codierrings aufweist. Erfindungsgemäß weist das Körperteil einen den Sitz bildenden Absatz auf, wobei der den Sitz bildende Absatz des Körperteils mit einer ringförmigen Nut am Umfang ausgeführt ist, und wobei der Codierring mit einem zum Einführen in die Nut bestimmten Vorsprung ausgeführt ist oder wobei der den Sitz bildende Absatz des Körperteils mit einem ringförmigen Vorsprung am Umfang ausgebildet ist, der in eine Ringnut des Codierringes eingreift, um die formschlüssige und/oder kraftschlüssige Aufnahme des Codierrings auszubilden.

Die erfindungsgemäße Lösung ermöglicht auf vorteilhaft einfache Weise eine eindeutige Identifizierung des Anschlussorgans durch Aufstecken des Codierringes. Die Codierringe können mit ausgewählten Farben versehen werden, um Verwechslungen beim Anschließen der Leitungselemente zu vermeiden.

Entsprechend kann das Leitungselement ohne spezielle Kennzeichnung ausgeführt sein. Hierdurch ist eine gegenüber bisherigen Ausführungen vereinfachte Lagerhaltung von universell verwendbaren Leitungselementen sowie Schraubelementen erzielbar, die sich gegebenenfalls lediglich hinsichtlich ihrer Kalibrierungen voneinander unterscheiden. Ein weiterer Vorteil der Erfindung ist darin zu sehen, dass der Codierring jeweils nachträglich über das mit dem Anschlussorgan bestückte Leitungselement geführt und auf den Absatz des Kopfteils bzw. des Körperteils aufgesteckt werden kann, wodurch eine sichere Markierung der Leitungsverbindung gewährleistet und die Montage des Leitungselements erleichtert wird.

Die vorliegende Erfindung wird auch in einem Anschlusssystem gesehen, das aus mehreren üblicherweise paarweise miteinander verschraubbaren Schraubelementen besteht, die zur Verbindung eines Leitungselements zur Förderung eines Mediums mit einem Gerät oder mit einem weiteren Leitungselement ausgebildet sind und je einen Gewindeteil und einen Körperteil aufweisen, mit dem Kennzeichen, dass mindestens einige der Schraubelemente einen Körperteil mit einem Sitz für die formschlüssige und/oder kraftschlüssige Aufnahme eines darauf montierbaren,aufsteckbaren, elastisch ausgebildeten Codierringes aufweist, wobei der Codierring vorzugsweise eine der Form des Sitzes komplementäre Form aufweist, und dass das Anschlusssystem ferner mehrere voneinander unterscheidbare Codierringe umfasst.

Vorteil der Erfindung ist darin zu sehen, dass der Codierring jeweils nachträglich über das mit dem Anschlussorgan bestückte Leitungselement geführt und auf den Absatz des Kopfteils bzw. des Körperteils aufgesteckt werden kann, wodurch eine sichere Markierung der Leitungsverbindung gewährleistet und die Montage des Leitungselements erleichtert wird.

Weiterbildungen und/oder vorteilhafte Ausbildungen des erfindungsgemäßen Anschlussorgans bzw. Anschlusssystems sind Gegenstand der abhängigen Ansprüche.

Nachfolgend wird die Erfindung anhand der beiliegenden Zeichnungen erläutert.

Es zeigen:
- Fig. 1: einen Längsschnitt einer erfindungsgemäßen Anschlussorgans für ein Leitungselement zur Förderung von Media,
- Fig. 2: einen Längsschnitt eines erfindungsgemäßen Codierringes in einer größeren Darstellung,
- Fig. 3: einen Längsschnitt einer zweiten Ausführung eines erfindungsgemäßen Anschlussorgans,
- Fig. 4: eine teilweise in einer axialen Ebene geschnittenen Darstellung einer erfindungsgemäß ausgelegten Verschraubung zur Verbindung eines Rohres bzw. eines Schlauches mittels Klemmringen und einer Überwurfmutter an einem Schraubelement mit einem ein Außengewinde aufweisenden Vorsprung,
- Fig. 5: eine Darstellung einer erfindungsgemäß ausgelegten Verschraubung ähnlich der Fig. 4, bei der jedoch die Überwurfmutter durch ein ein Außengewinde aufweisendes Schraubelement ersetzt ist, dessen Gewinde in eine Gewindebohrung des anderen Schraubelements eingeschraubt ist,
- Fig. 6A: eine Darstellung ähnlich der Fig. 5, bei der jedoch das Schraubelement mit dem Außengewinde zur Aufnahme von zwei Codierringen erfindungsgemäß ausgebildet ist und bei der am anderen Ende der Leitung ein weiteres erfindungsgemäßes Schraubelement gezeigt ist,
- Fig. 6B: eine Seitenansicht der Verschraubung gemäß Fig. 6A in einer auseinander gezogenen Darstellung,
- Fig. 7A-7F: eine Variante der erfindungsgemäßen Überwurfmutter der Fig. 4 mit der Möglichkeit, Codierringe an beiden Enden der Überwurfmutter anzubringen, wobei die Fig. 7A die Überwurfmutter in Seitenansicht, die Fig. 7B eine Schnittzeichnung der Fig. 7A an der Schnittebene A-A, die Fig. 7C und 7D Darstellungen ähnlich der Fig. 7A und 7B zeigen, jedoch nach Montage der entsprechenden Codierringe, die Fig. 7E und 7F perspektivische Darstellungen des Mutterelements mit aufgesetzten Codierringen von den jeweiligen Enden zeigen,
- Fig. 8A: einen Längsschnitt einer weiteren erfindungsgemäßen Überwurfmutter zum Festlegen des Leitungselements an ein erfindungsgemäßes Anschlussorgan, das ein weiteres erfindungsgemäßes Schraubelement darstellt,
- Fig. 8B: eine Darstellung ähnlich der Fig. 8A, jedoch mit einem durchgehenden Leitungselement bzw. Rohr oder Schlauch und
- Fig. 9: eine Seitenansicht eines als Clip ausgebildeten Codierringes.

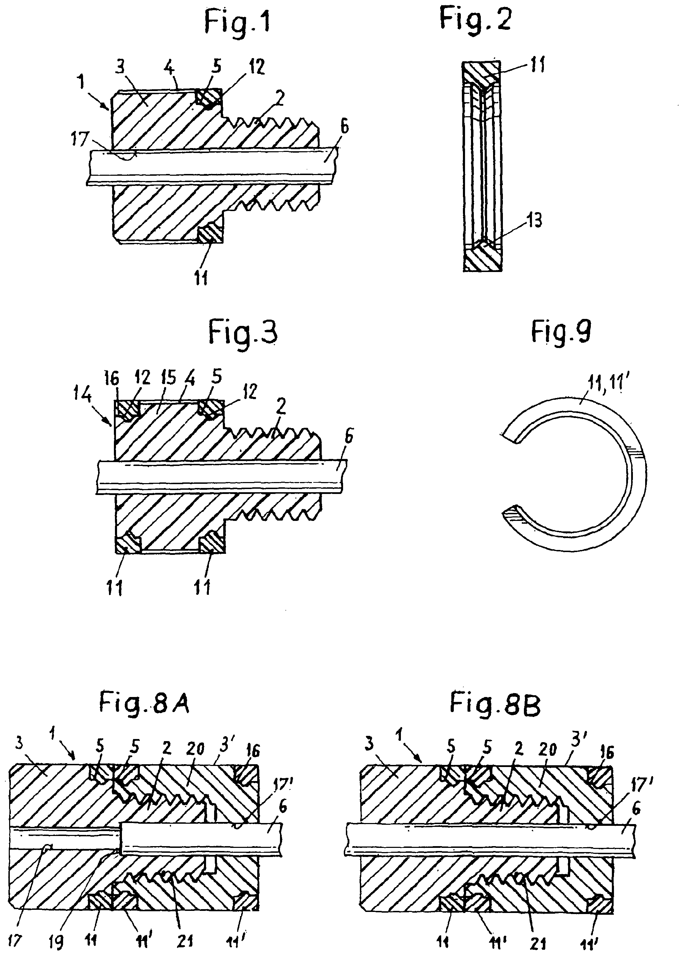

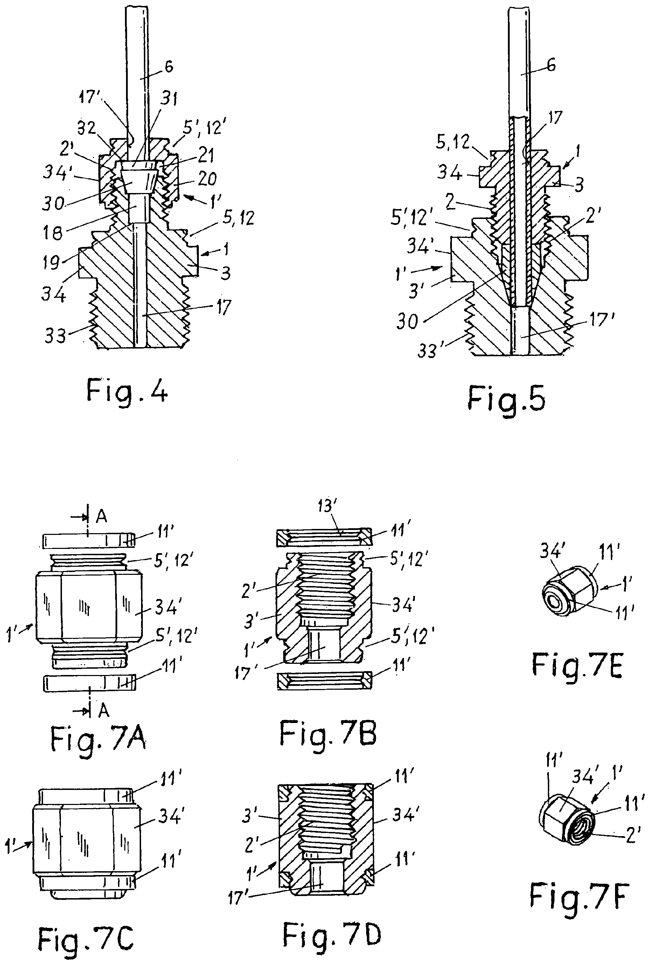

Das in der Figur 1 dargestellte Anschlussorgan besteht aus einer hohlen Schraube bzw. aus einem hohlen Schraubelement 1 mit einem Gewindeteil 2 und einem gegenüber diesem radial erweiterten zylindrischen Kopfteil bzw. Körperteil 3, der mit einer Rändelung 4 versehen oder als Sechskant ausgebildet sein kann. Der Körperteil 3 weist an der dem Gewindeteil 2 zugewandten Seite einen Absatz 5 und einen Codierring 11 auf. Der Codierring ist hier ein geschlossener Ring, wie in der vergrößerten Darstellung gemäß Fig. 2 in Schnitt gezeigt ist, könnte aber, wie nachfolgend erläutert wird, als Clip ausgebildet werden, insbesondere in Form eines nicht vollständig geschlossenen Rings, wie in Fig. 9 gezeigt. Das Schraubelement 1 ist zum Aufstecken auf ein Leitungselement 6 bestimmt, das für unterschiedliche Media benutzt werden kann. Als Leitungselement 6 kann ein starres Rohr oder, wie bei der dargestellten Ausführung angenommen, ein flexibler Schlauch vorgesehen sein. Konkrete Ausbildungen erfindungsgemäßer Verschraubungen werden später in Bezug auf die Fig. 4 bis 6 näher beschrieben.

Das Schraubelement 1 weist eine axiale Durchgangsbohrung 17 auf, die das aufzunehmende Leitungselement 6 umschließt. Zusätzlich kann das Anschlussorgan mit einem Knickschutzelement (nicht gezeigt) versehen werden. Der Absatz 5 des Körperteils 3 bildet einen Sitz zur Aufnahme des von der Gewindeseite her aufsteckbaren Codierringes 11, der zum Markieren des Anschlussorgans bestimmt und hierzu mit einer Kennzeichnung, z. B. einer entsprechenden Farbgebung, versehen ist. Die Verbindung zwischen dem Absatz 5 und dem Codierring ist hier formschlüssig ausgeführt und kann, wie dargestellt, eine ringförmige Nut 12 am Umfang des Absatzes 5 zur Sicherung des Codierringes 11 aufweisen, wobei am Codierring 11 ein in die Nut 12 einführbarer ringförmiger Vorsprung 13 vorgesehen ist, wie zu einem vergrößerten Maßstab aus Fig. 2 hervorgeht. Alternativ zu der Ausbildung des Codierringes 11 mit einem Vorsprung 13, der in eine Nut 12 am Umfang des Absatzes eingreift, kann in diesem Beispiel wie auch in den anderen Beispielen ein Vorsprung am Absatz 5 anstelle einer Nut vorgesehen werden und in eine entsprechende Nut im Codierring eingreifen.

Als Codierring kann auch in allen Beispielen ein O-Ring verwendet werden.

Das Schraubelement 1 kann aus einem Material, ausgewählt aus der Gruppe Metall, Kunststoff oder einer Kombination davon bestehen. Bei der dargestellten Ausführung ist Kunststoff angenommen. Der Codierring 11 besteht aus einem zum Aufstecken elastisch verformbaren Material, beispielsweise Kunststoff, und kann darstellungsgemäß mit einem Außendurchmesser ausgeführt sein, der demjenigen des Körperteils 3 entspricht. Die Verbindung zwischen dem Absatz 16 und dem Codierring 11 ist somit hier formschlüssig ausgeführt, könnte aber rein kraftschlüssig erfolgen oder kraft- und formschlüssig sein. Die Verbindung kann auch als konische Steckverbindung ausgeführt sein. Das Schraubelement 1 der Fig. 1 kann auch mit zwei (oder mehr) Codierringen 11 vorgesehen werden, wie beispielsweise in Fig. 3 gezeigt ist.

Bezugnehmend auf die Figur 4 wird hier eine Verschraubung gezeigt mit einem ersten männlichen Anschlussorgan 1 in Form eines Schraubelements mit einem Außengewinde 2, das mit einem weiblichen zweiten erfindungsgemäßen Anschlussorgan 1' bzw. Schraubelement in Form einer Überwurfmutter 20 mit Gewindebohrung 21 zusammenarbeitet, um eine Rohrleitung 6, die als metallisches Rohr oder als Kunststoffrohr ausgebildet sein kann, an das Schraubelement 1 zu befestigen. Um dies zu erreichen, weist das Schraubelement 1 eine abgestufte Bohrung 17 auf, mit einem Bereich 18 größeren Durchmessers, der über eine Ringschulter 19 in einen Bereich der Bohrung 17 mit kleinerem Durchmesser übergeht.

Die Stirnseite des Rohres 6 stößt gegen diese Ringschulter 19. Um das untere Ende des Rohres 6 herum, in der Darstellung gemäß Fig. 4, befinden sich zwei Klemmringe 30 und 31, wobei der Klemmring 30 konusförmig ausgebildet ist und in einen konusförmigen Bereich des vorstehenden männlichen Gewindes 2 des Schraubelements 1 hineinpasst. Der Klemmring 31 kann entweder als zylindrischer Stützring mit zwei zueinander plan parallelen Stirnseiten ausgebildet werden oder kann auch ein weiterer konusförmiger Ring sein mit einem im Vergleich zu dem Klemmring 30 steileren konusförmigen Bereich, der in eine konusförmige Vertiefung des Klemmrings 30 hineingreift. Auch ist es möglich lediglich mit einem Klemmring zu arbeiten, der dann üblicherweise in etwa die Gestalt des Klemmrings 30 aufweist.

Das weibliche Anschlussorgan bzw. Schraubelement 1', das hier als Überwurfmutter 20 ausgebildet ist, weist ein Innengewinde 2' auf und kann somit auf das Außengewinde 2 des männlichen Anschlussorgans 1 aufgeschraubt werden. Die Überwurfmutter 1' hat ferner eine Bohrung 17' mit einem Durchmesser, der dem Durchmesser des Rohres 6 entspricht oder geringfügig größer als dieser Durchmesser ausgebildet ist. Zwischen der Bohrung und dem Innengewinde 2' befindet sich auch eine radiale Schulter 32, die gegen die obere Stirnseite des Klemmrings 31 drückt und beim Festziehen des als Überwurfmutter ausgebildeten Anschlussorgans 1' die Klemmringe 31, 30 bzw. 30 gegen die Leitung 6 und in die konusförmige Aufnahme für einen Klemmring 30 drückt, wodurch eine dichte Verbindung erzielt wird. Das Anschlussorgan 1 weist an seinem unteren Ende einen Gewindebereich 33 auf, wodurch das Anschlussorgan 1 in das Gehäuse eines Gerätes eingeschraubt werden kann, um eine Fluidverbindung zu dem Gehäuse zu schaffen.

Das Schraubelement 1 weist hier eine Werkzeugaufnahme 34 auf, beispielsweise in Form eines Sechskants. Das als Überwurfmutter ausgebildete Schraubelement 1' weist ebenfalls eine Werkzeugaufnahme 34' auf, auch hier in Form eines Sechskants. Das Schraubelement 1 ist mit einem ringförmigen Absatz bzw. einer ringförmigen Nut 5 mit Vertiefung 12 ausgestattet, genauso wie das Schraubelement 1 der Fig. 1. Auch das Schraubelement 1' ist mit einer entsprechenden Ringnut 5' und Vertiefung 12' ausgestattet.

Anstatt ein Schraubelement 1 vorzusehen, das in ein Gehäuse eingeschraubt wird, kann es sich bei dem Schraubelement 1 um ein beliebiges Verbindungsstück handeln. Es soll zum Ausdruck gebracht werden, dass beim Einsetzen von Ringen wie 11 auf den Absatz 5, 12 bzw. 5', 12' in Fig. 4 üblicherweise Klemmringe mit den gleichen Codierungen gewählt werden, wodurch der Monteur einwandfrei sehen kann, welche Teile zusammenpassen, um eine einwandfreie Verschraubung mit der korrekten Zuordnung zu schaffen.

Die Ausführung gemäß Fig. 5 ist der Ausführung gemäß Fig. 4 relativ ähnlich, und es werden die gleichen Bezugszeichen verwendet, die in Fig. 4 verwendet werden und die bisherige Beschreibung passt auch für diese Bauteile, es sei denn, es wird etwas Anderes zum Ausdruck gebracht.

Es ist ersichtlich, dass die männlichen Teile der erfindungsgemäßen Anschlusssysteme stets mit Bezugszeichen ohne Strich gekennzeichnet sind, während die dazu passenden weiblichen Teile mit Innengewinde stets mit einem Strich gekennzeichnet sind.

Konkret wird bei der Ausführungsform der Fig. 5 das Schraubelement 1 mit einem männlichen Gewindeteil 2 ausgeführt und mit einer in diesem Fall durchgehenden Bohrung 17 versehen. Das Gewinde 2 des in dieser Darstellung oberen Schraubelementes 1, weist an seiner unteren Stirnseite eine radiale Fläche, die gegen die radiale Stirnfläche des Klemmringes 30 drückt. Der Klemmring 30 hat in diesem Beispiel einen oberen zylindrischen Bereich und einen unteren konusförmigen Bereich, wobei der untere konusförmige Bereich durch Anziehen des Schraubelements 1 gegen einen konusförmigen Sitz im Schraubelement 1' gedrückt wird. Hierdurch wird auch der Klemmring 30 nicht nur dichtend gegen den konusförmigen Sitz im Schraubelement 1', sondern auch dichtend gegen die Leitung 6 gedrückt, und sichert auch die Leitung 6 gegen Ausziehkräfte (wie auch bei der Ausführungsform gemäß Fig. 4 gezeigt). Die Klemmringe können gegebenenfalls als so genannte Schneidringe ausgeführt werden, um eine noch festere Verbindung zu erreichen.

Es wird darauf hingewiesen, dass die Verwendung der Bezeichnung "oben und unten" in dieser Anmeldung nicht bedeutet, dass die Teile zwangsweise oben oder unten angeordnet werden müssen, sondern sie dient lediglich der einfachen Erklärung der geometrischen Gegebenheiten in den Zeichnungen. Alle Teile können eine beliebige Raumorientierung annehmen.

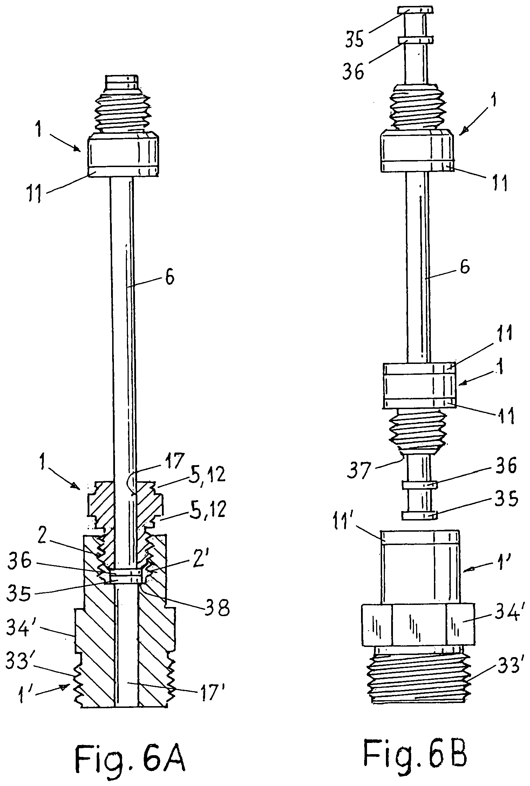

Die Fig. 6A zeigt eine weitere Ausbildung ähnlich der Fig. 5, jedoch mit einigen Unterschieden. Auch hier werden die gleichen Bezugszeichen verwendet wie bisher und es versteht sich, dass die gleiche Beschreibung auch für die Fig. 6A und 6B gilt. Auch hier werden nur die wesentlichen Unterschiede beschrieben.

Man merkt hier, dass die Rohrleitung 6 die Form eines Kunststoffrohres (oder eines Metallrohres) mit einem Bund 35 an beiden Enden, d.h. am unteren Ende und am oberen Ende aufweist. Jeder Bund 35 bildet einen sich radial erstreckenden Flansch und wird über eine Stützscheibe 36 gegen eine sich radial erstreckende Schulter 19' im Schraubelement 1' gedrückt. Das Schraubelement 1 hat, ebenso wie in der Ausführungsform der Fig. 5, eine sich radial erstreckende Stirnseite 37 um die Bohrung 17 herum, die gegen die Stützscheibe 36 und über die Stützscheibe 36 gegen den Bund 35 drückt und diesen an die radiale Schulter 38 der abgestuften Bohrung 17' presst.

Hier weist das Schraubelement 1 zwei Absätze bzw. Nuten mit Vertiefungen 5, 12 zur Aufnahme von zwei Ringen 11 auf, wie aus Fig. 6B ersichtlich ist.

Das Schraubelement 1' kann auch mit einem Codierring 11' versehen werden (oder mehrere entsprechende Codierringe) oder auch ohne Codierring ausgeführt werden, (wie in Fig. 6A angedeutet).

Die Fig. 6A und 6B zeigen ferner, dass ein zweites Schraubelement 1 am oberen Ende der Leitung 6 vorgesehen werden kann, wobei in diesem Beispiel das obere Schraubelement 1 genauso ausgebildet ist wie das untere Schraubelement 1, mit der Ausnahme, dass das obere Schraubelement 1 als Variante nur mit einem Codierring 11 ausgestattet ist. Es ist keinesfalls erforderlich, dass das obere Schraubelement 1 in den Fig. 6A und 6B die gleiche Ausbildung aufweist wie das untere, sondern es könnte ein beliebiges Schraubelement oder ein anderweitiges Verbindungselement am oberen Ende der Leitung 6 vorgesehen werden, beispielsweise ein Einsteckelement, das auch mit einem Codierring ausgestattet werden könnte.

Auch das Schraubelement 1' gemäß Fig. 4, das dort mit einem Codierring ausgestattet werden soll, kann zur Aufnahme von zwei Codierringen ausgebildet werden, wie in den Fig. 7A bis 7F gezeigt.

Wie aus den Fig. 7A und 7B hervorgeht, können dann die entsprechenden Codierringe 11' von oben und unten in axialer Richtung auf den entsprechenden Absatz 5' gedrückt werden, wobei durch elastische Verformung des Innenvorsprungs 13' der Klemmringe 11' diese Montage möglich ist und anschließend der Vorsprung 13' in die Nut 12' einspringt und die entsprechenden Codierringe 11' gegen unbeabsichtigtes Lösen sichert. Die Fig. 7C und 7D zeigen das als Überwurfmutter ausgebildete Schraubelement 1' nach der Montage der Codierringe.

Die Fig. 8A und 8B zeigen ein mit einem Codierring 11 versehenes männliches Schraubelement 1 sowie eine mit zwei Codierringen 11' versehene Überwurfmutter 20. Die Überwurfmutter 20 hat eine zum Gewindeteil 2 des Schraubelements 1 passende Gewindebohrung 21 sowie eine Bohrung 17' für das Leitungselement 6 und dient dem Festlegen des Leitungselements 6 an dem Schraubelement 1. Während in der Fig. 8A das Leitungselement 6 an einer Ringschulter 19 anliegt, erstreckt es sich in der Fig. 8B durch das ganze Schraubelement hindurch. Das männliche Schraubelement 1 könnte aber auch zwei oder mehrere Codierringe aufweisen und die Überwurfmutter mit einem, zwei oder mehreren Codierringen 11' versehen werden.

Schließlich zeigt die Fig. 9, dass der Codierring 11, 11' nicht unbedingt als geschlossener Ring ausgebildet sein kann sondern stattdessen in Form eines offenen Ringes oder Clips. Eine solche Ausbildung ermöglicht auch die Montage von der Seite des entsprechenden Schraubelements 1 bzw 1' und zwar auch dann wenn nach dem Aufbau einer Anlage die Leitungen nachträglich gekennzeichnet werden sollen. Diese Ausbildung macht es auch leichter den Codierring aufzubringen wenn der Absatz als relativ tiefe Nut mit zwei die Nut begrenzende und voneinander einen Abstand aufweisenden Seitenwänden versehen ist.

Die vorstehend beschriebene Ausführung ist für beliebige Anwendungen, z. B. für unterschiedliche Leitungen im Laborbereich, geeignet. Durch unterschiedlich gekennzeichnete Codierringe können jeweils auf vorteilhaft einfache Weise sichere Markierungen der Anschlussorgane gewährleistet und damit eindeutig identifizierbare Leitungsverbindungen erzielt werden.

## Patentansprüche

1. Anschlussorgan (1; 1') für ein starres Rohrleitungselement oder flexibles Schlauchleitungselement (6) zur Förderung eines Mediums, mit einem Codierring (11, 11'), wobei das Anschlussorgan aus einem auf das Rohrleitungselement oder Schlauchleitungselement (6) aufsteckbaren hohlen Schraubelement, das einen Gewindeteil (2; 2') sowie ein Körperteil (3; 3') gegebenenfalls mit Werkzeugaufnahme (34; 34') aufweist, besteht und das mit einem ein komplementäres Gewinde (2'; 2) sowie ein Körperteil (3'; 3) aufweisenden komplementären Schraubelement (1', 1) verschraubbar ist, wobei das Körperteil (3; 3') des aufsteckbares hohlen Schraubelements (1, 1') und vorzugsweise des komplementären Schraubelements (1'; 1) einen Sitz (12; 12') für die Aufnahme des darauf montierbaren bzw. aufsteckbaren elastisch ausgebildeten Codierrings (11; 11') aufweist, **dadurch gekennzeichnet, dass** das Körperteil (3', 3) des aufsteckbaren hohlen Schraubelements und vorzugsweise des komplementären Schraubelements einen den Sitz bildenden Absatz (5, 5') aufweist, und dass entweder der den Sitz bildende Absatz (5; 5') des Körperteils (3; 3') mit einer ringförmigen Nut (12; 12') am Umfang ausgeführt ist, und der Codierring mit einem zum Einführen in die Nut bestimmten Vorsprung (13; 13') ausgeführt ist oder dass der den Sitz bildende Absatz des Körperteils mit einem ringförmigen Vorsprung am Umfang ausgebildet ist, der in eine Ringnut des Codierringes eingreift, um die formschlüssige und/oder kraftschlüssige Aufnahme des Codierrings auszubilden.

2. Anschlussorgan nach Anspruch 1, **dadurch gekennzeichnet, dass** das Schraubelement (1) aus einer auf das Rohrleitungselement oder Schlauchleitungselement (6) aufsteckbaren hohlen Schraube besteht, wobei das Körperteil (3) der hohlen Schraube auf der dem Gewindeteil (2) zugewandten Seite und/oder auf der dem Gewindeteil (2) abgewandten Seite mit einem den Sitz bildenden Absatz (5) ausgeführt ist, der einen größeren Durchmesser als der Gewindeteil (2) aufweist.

3. Anschlussorgan nach Anspruch 1 oder 2, **dadurch gekennzeichnet, dass** das Körperteil (3') des komplementären Schraubelements (1') auf der dem Gewinde (2') zugewandten Seite und/oder auf der dem Gewinde (2') abgewandten Seite mit einem den Sitz bildenden Absatz (5') ausgeführt ist, der einen größeren Durchmesser als der Gewinde (2') aufweist.

4. Anschlussorgan nach einem der vorhergehenden Ansprüche, **dadurch gekennzeichnet, dass** der Codierring (11; 11') von der Gewindeseite her auf den Absatz (5; 5') des Körperteils (3; 3') aufsteckbar ist.

5. Anschlussorgan nach einem der vorhergehenden Ansprüche, **dadurch gekennzeichnet, dass** der Codierring (11; 11') als Clip ausgebildet ist und aus einem elastisch verformbaren Material besteht oder als O-Ring ausgebildet ist.

6. Anschlussorgan nach Anspruch 1, **dadurch gekennzeichnet, dass** das Schraubelement (1') als Überwurfmutter (20) bzw. -kappe ausgebildet ist.

7. Anschlussorgan nach Anspruch 6, **dadurch gekennzeichnet, dass** die Überwurfmutter (20) bzw. -kappe an mindestens einem Ende mit einem den Sitz bildenden Absatz (5') ausgeführt ist, der einen größeren Durchmesser als der Außendurchmesser des Innengewindes (21) aufweist.

8. Anschlusssystem bestehend aus mehreren Anschlussorganen nach einem der vorhergehenden Ansprüche.

9. Anschlusssystem nach Anspruch 8, **dadurch gekennzeichnet, dass** die Codierringe (11, 11') oder einige davon als Clip ausgebildet sind und aus einem elastisch verformbaren Material bestehen.

10. Anschlusssystem nach Anspruch 8 oder 9, **dadurch gekennzeichnet, dass** die Codierringe durch unterschiedliche Farbgebung voneinander unterscheidbar sind.

## Claims

1. A connection member (1; 1') for a rigid pipe element or for a flexible tube element (6) for conveying a medium, the connection element having a code ring (11, 11') wherein the connection member comprises a hollow threaded element which can be pushed onto the pipe element or the tube element (6) and which has a threaded part (2; 2') and also a body part (3; 3') optionally with a tool mount (34; 34') and which can be screwed to a complementary threaded element (1', 1) having a complementary thread (2', 2) and also a body part (3'; 3) with the body part (3; 3') of the threaded element (1, 1') which can be pushed on, and preferably the body part of the complementary threaded element (1'; 1), having a seat (12; 12') for receiving the elastically designed code ring (11; 11') which can be installed on it or pushed onto it, **characterized in that** the body part (3', 3) of the hollow threaded element which can be pushed on, and preferably the body part of the complementary threaded element, has a land (5, 5') forming the seat and that either the land (5, 5') of the body part (3, 3') forming the seat is designed with a ring-like groove (12; 12') at the periphery and the code ring is designed with a projection (13; 13') intended for introduction into the groove, or the land of the body part forming the seat is formed with a ring-like projection at the periphery which engages into a ring groove of the code ring, in order to form a form-fitted and/or force-transmitting mount for the code ring.

2. A connection member in accordance with claim 1, **characterized in that** the threaded element (1) consists of a hollow screw which can be pushed onto the pipe element or the tube element (6), with the body part of the hollow screw being formed with a land (5) forming the seat at the side adjacent the thread (2) and/or at the side remote from the thread part (2), the land having a larger diameter than the thread part (2).

3. A connection member in accordance with claim 1 or claim 2, **characterized in that** the body part (3') of the complementary threaded element (1') has a land forming a seat at the side adjacent the thread (2') and/or at the side remote from the thread (2'), the land (5') having a larger diameter than the thread (2').

4. A connection member in accordance with one of the preceding claims, **characterized in that** a code ring (11; 11') can be pushed onto the land (5; 5') of the body part (3, 3') coming from the thread side.

5. A connection member in accordance with one of the preceding claims, **characterized in that** the code ring (11; 11') is formed as a clip and consists of an elastically deformable material, or is formed as an O-ring.

6. A connection member in accordance with claim 1, **characterized in that** the threaded element (1') is formed as a sleeve nut (20) or sleeve cap.

7. A connection member in accordance with claim 6, **characterized in that** the sleeve nut (20) or sleeve cap is designed at at least one end with a land (5') forming the seat which has a larger diameter than the outer diameter of the internal thread (21).

8. A connection system comprising a plurality of connection members in accordance with any one of the preceding claims.

9. A connection system in accordance with claim 8, **characterized in that** the code rings (11; 11'), or some of them, are formed as a clip and consist of an elastically deformable material.

10. A connection system in accordance with claim 8 or claim 9, **characterized in that** the code rings can be distinguished from one another by different colouring.

## Revendications

1. Organe de raccord (1 ; 1') pour un élément de conduite tubulaire rigide ou un élément de tuyau flexible (6) pour transporter un fluide, comportant une bague de codage (11, 11'), l'organe de raccord étant constitué par un élément de vissage creux enfichable sur l'élément de conduite tubulaire ou sur l'élément de tuyau flexible (6), lequel présente une partie à pas de vis (2 ; 2') ainsi qu'une partie de corps (3 ; 3'), le cas échéant avec un attachement d'outil (34 ; 34'), et pouvant être vissé avec un élément de vissage complémentaire (1'; 1) présentant un pas de vis complémentaire (2' ; 2) ainsi qu'une partie de corps (3' ; 3), la partie de corps (3 ; 3') de l'élément de vissage (1, 1') creux enfichable et de préférence de l'élément de vissage complémentaire (1' ; 1) présente un siège (12 ; 12') pour la réception de la bague de codage (11 ; 11') réalisée élastique, susceptible d'être montée ou enfichée sur celui-ci, **caractérisé en ce que** la partie de corps (3' ; 3) de l'élément de vissage creux enfichable et de préférence de l'élément de vissage complémentaire présente un talon (5, 5') formant le siège, et **en ce que** soit le talon (5, 5') de la partie de corps (3 ; 3') formant le siège est réalisé avec une rainure annulaire (12 ; 12') à la périphérie, et la bague de codage est réalisée avec une saillie (13 ; 13') destinée à être introduite dans la rainure, soit le talon de la partie de corps formant le siège est formé avec une saillie annulaire sur la périphérie qui s'engage dans une rainure annulaire de la bague de codage pour réaliser une réception de la bague de codage par coopération de formes et/ou par coopération de forces.

2. Organe de raccord selon la revendication 1, **caractérisé en ce que** l'élément de vissage (1) est constitué par une vis creuse enfichable sur l'élément de conduite tubulaire ou sur l'élément de tuyau flexible (6), la partie de corps (3) de la vis creuse étant réalisée sur la face tournée vers la partie à pas de vis (2) et/ou sur la partie détournée de la partie à pas de vis (2) avec un talon (5) formant le siège qui présente un diamètre supérieur à la partie à pas de vis (2).

3. Organe de raccord selon la revendication 1 ou 2, **caractérisé en ce que** la partie de corps (3') de l'élément de vissage complémentaire (1') est réalisée sur la face tournée vers le pas de vis (2') et/ou sur la face détournée du pas de vis (2') avec un talon (5') formant le siège qui présente un diamètre supérieur au pas de vis (2').

4. Organe de raccord selon l'une des revendications précédentes, **caractérisé en ce que** la bague de codage (11 ; 11') est enfichable sur le talon (5 ; 5') de la partie de corps (3 ; 3)' depuis le côté pas de vis.

5. Organe de raccord selon l'une des revendications précédentes, **caractérisé en ce que** la bague de codage (11 ; 11') est réalisée sous forme de clip et est constituée par un matériau élastiquement déformable ou est réalisée sous forme de bague torique.

6. Organe de raccord selon la revendication 1, **caractérisé en ce que** l'élément de vissage (1') est réalisé sous forme d'écrou-raccord (20) ou de capuchon, respectivement.

7. Organe de raccord selon la revendication 6, **caractérisé en ce que** l'écrou-raccord (20) ou le capuchon est réalisé à au moins une extrémité avec un talon (5') formant le siège, qui présente un diamètre supérieur au diamètre extérieur du pas de vis intérieur (21).

8. Système de raccord constitué par plusieurs organes de raccord selon l'une des revendications précédentes.

9. Système de raccord selon la revendication 8, **caractérisé en ce que** les bagues de codage (11, 11') ou certaines d'entre elles sont réalisées sous forme de clips et constituées par un matériau élastiquement déformable.

10. Système de raccord selon la revendication 8 ou 9, **caractérisé en ce que** les bagues de codage se distinguent les unes des autres par différentes couleurs.
